# DEMANDE DE BREVET EUROPEEN

(11) **EP 3 048 428 A1**
(43) Date de publication de la demande: **27.07.2016**
(21) Numéro de dépôt: 16151502.8
(22) Date de dépôt: 15.01.2016
(51) Int. Cl.: G01F 1/115, G01F 15/04, G01F 15/06, G01F 1/075, F03B 13/00, F03B 17/00, G01F 25/00, H01L 41/00, G01F 7/00

(54) **COMPTEUR A DOUBLE MOYEN DE COMPTAGE**

(30) Priorité: 16.01.2015 FR 1550367
(71) Demandeur: SAGEMCOM ENERGY & TELECOM SAS, 92500 Rueil-Malmaison (FR)
(72) Inventeur: SABATIER, Pierre, 92500 Rueil Malmaison (FR)
(74) Mandataire: Lavialle, Bruno François Stéphane

(57) **Abrégé**

Compteur de fluide, comprenant un conduit de circulation du fluide, un premier dispositif et un deuxième dispositif de mesure d'une quantité de fluide circulant dans le conduit, et une unité électronique de commande reliée aux deux dispositifs de mesure. Le premier dispositif de mesure comporte un rotor monté à rotation dans le conduit pour être entrainé en rotation par le fluide circulant à une vitesse comprise dans une plage prédéterminée. Le deuxième dispositif de mesure comporte un capteur efficace sur au moins une partie inférieure de la plage de vitesses.

## Description

La présente invention concerne la distribution de fluide et plus particulièrement le comptage des quantités distribuées. L'invention s'applique par exemple à la distribution de gaz.

Un réseau de distribution de gaz comprend des conduites reliées via des compteurs à des installations consommatrices de gaz.

Un compteur comprend généralement un conduit de circulation du fluide, un dispositif de mesure de la quantité de gaz circulant dans le conduit, et une unité électronique de commande reliée au dispositif de mesure.

Le dispositif de mesure comprend par exemple un rotor monté à rotation dans le conduit pour être entrainé en rotation par le fluide y circulant et un compteur de tours pour déterminer le nombre de tours du rotor. Le rotor comprend des aubes de turbines ou est plus simplement constitué d'une hélice. Le compteur de tours est relié à l'unité de commande qui calcule à partir de ce nombre de tours le volume de gaz consommé par l'installation consommatrice raccordée au compteur. Il est alors possible de facturer le responsable de ladite installation.

Ces compteurs sont relativement peu chers tout en étant relativement fiables.

Toutefois, on s'est aperçu que le gaz n'entraine le rotor que si sa vitesse d'écoulement est comprise dans une plage prédéterminée et que la mesure a une précision plus faible dans une partie inférieure de cette plage de vitesse. En outre, les jeux existant entre les composants du rotor et l'évolution de ces jeux dans le temps (usure ou grippage) altèrent la précision de la mesure.

Un but de l'invention est de fournir un moyen pour améliorer la fiabilité des compteurs utilisés pour la distribution de fluide.

A cet effet, on prévoit, selon l'invention, un compteur de fluide, comprenant un conduit de circulation du fluide, un premier dispositif et un deuxième dispositif de mesure d'une quantité de fluide circulant dans le conduit, et une unité électronique de commande reliée aux deux dispositifs de mesure, le premier dispositif de mesure comportant un rotor monté à rotation dans le conduit pour être entrainé en rotation par le fluide circulant à une vitesse comprise dans une plage prédéterminée, le premier dispositif de mesure ayant un fonctionnement optimal lorsque la vitesse d'écoulement du gaz est dans une première partie de la plage de vitesses, le deuxième dispositif de mesure comportant un capteur efficace sur au moins une deuxième partie de la plage de vitesses au moins partiellement différente de la première partie, l'unité de commande du compteur est agencée pour :
- utiliser les mesures provenant du premier dispositif de mesure tant que la vitesse d'écoulement du gaz est dans la première partie de la plage de vitesses ;
- utiliser les mesures provenant du deuxième dispositif de mesure lorsque la vitesse d'écoulement du gaz est dans la deuxième partie de la plage de vitesses.

Ainsi, le deuxième dispositif de mesure peut être utilisé pour effectuer la mesure dans la deuxième partie de la plage de vitesses dans laquelle le premier dispositif de mesure a une précision moindre. Le deuxième dispositif de mesure peut aussi être utilisé pour corriger les mesures du premier dispositif de mesure dans la deuxième partie de la plage de vitesses. Le capteur du deuxième dispositif de vitesse est par exemple un capteur statique, c'est-à-dire ne comportant pas de pièces mécaniques mobiles, tel qu'un capteur à ultrason. Ces capteurs autorisent une meilleure précision à basse vitesse que le rotor, la deuxième partie de la plage de vitesses correspondant alors à des vitesses d'écoulement inférieures à celles de la première partie.

Avantageusement, le premier dispositif de mesure et le deuxième dispositif de mesure sont agencés pour être efficaces sur une partie commune de la plage de vitesse et l'unité de commande est agencée pour effectuer une opération d'étalonnage du premier dispositif de mesure par comparaison des mesures des deux dispositifs de mesure.

Il est ainsi possible d'effectuer un étalonnage des dispositifs de mesure.

Avantageusement encore, le rotor est lié en rotation à un élément d'entrée d'un générateur électriquement relié à une batterie électriquement reliée à l'unité de commande et/ou au deuxième dispositif de mesure.

L'énergie stockée dans la batterie est utilisée pour l'alimentation d'au moins une partie des composants du compteur de sorte que l'autonomie du compteur est relativement importante.

De préférence, l'élément d'entrée est monté pour tourner dans le conduit autour d'un axe de rotation et porte au moins un aimant excentré par rapport à l'axe de rotation et le générateur comprend un élément magnétostrictif monté à l'extérieur du conduit en regard d'une trajectoire de l'aimant, un élément piézoélectrique électriquement est fixé à l'élément magnétostrictif relié à un dispositif de charge raccordé à la batterie.

Ce mode de génération d'énergie présente l'avantage de ne pas nécessiter d'éléments traversant la paroi du conduit (comme des câbles ou des éléments d'entraînement mécanique du générateur), réduisant le risque de fuite au niveau du compteur.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique d'un compteur selon un premier mode de réalisation de l'invention,
- la figure 2 est une vue schématique d'un compteur selon un deuxième mode de réalisation de l'invention.

L'invention est ici décrite en application à la distribution de gaz. Néanmoins l'invention est applicable à la distribution de tout fluide, gaz ou liquide.

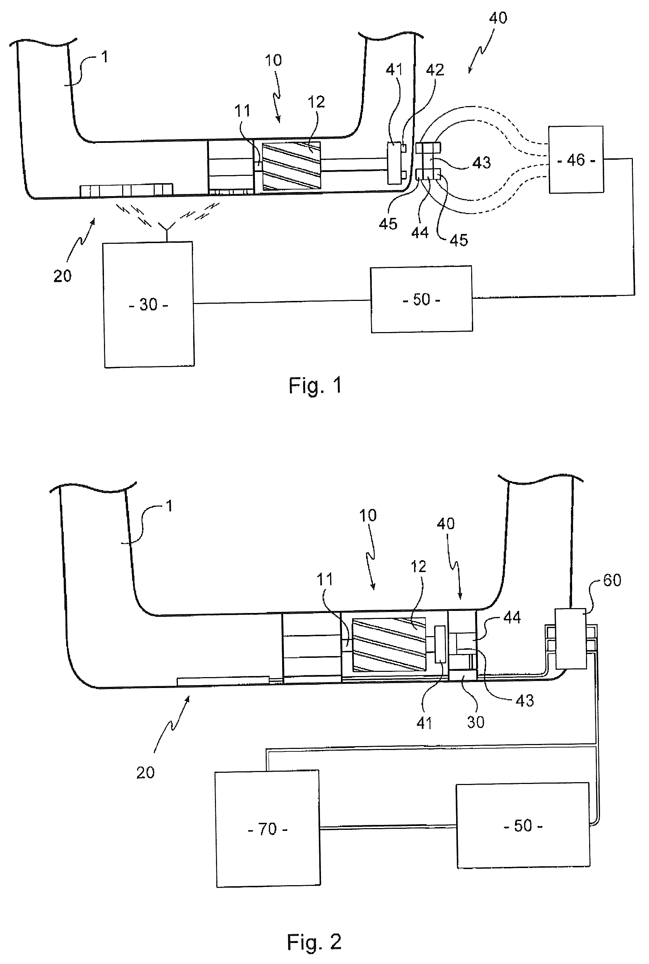

En référence à la figure 1 et selon le premier mode de réalisation, le compteur selon l'invention comprend un conduit 1 de circulation du gaz ayant un embout de raccordement au réseau de distribution et un embout de raccordement à une installation consommatrice ; un premier dispositif, généralement désigné en 10, de mesure d'une quantité de gaz circulant dans le conduit 1 ; un deuxième dispositif, généralement désigné en 20, de mesure d'une quantité de gaz circulant dans le conduit 1 ; et une unité électronique de commande 30 reliée aux deux dispositifs de mesure 10, 20.

Le premier dispositif de mesure 10 comporte un arbre 11 monté dans le conduit 1 pour pivoter autour d'un axe central du conduit 1 et un rotor 12 solidaire de l'arbre 11 et agencé dans le conduit 1 pour être entrainé en rotation par le gaz circulant dans le conduit 1. La mesure de quantité de gaz par rotor ou turbine est connue en elle-même. Ce mode de mesure fonctionne lorsque le gaz a une vitesse comprise dans une plage prédéterminée de vitesses (qui dépend principalement des caractéristiques du rotor 12 et des frottements s'opposant à sa rotation). On sait également que ce mode de mesure a une précision plus faible dans la partie inférieure de la plage de vitesses.

Le deuxième dispositif de mesure 20 comporte un capteur efficace sur toute l'étendue de la plage de vitesses et au-delà. Le capteur est ici un capteur à ultrasons disposé pour émettre des ultra-sons en un premier point dans le conduit 1 et pour détecter ces mêmes ultrasons en un deuxième point éloigné du premier point. La mesure de quantité de gaz par ultrasons est connue en elle-même.

L'unité de commande 30 est agencée pour mémoriser les quantités de gaz mesurées et calculer, de manière connue en elle-même, une énergie consommée à partir de ces quantités de gaz. A cette fin, l'unité de commande 30 comprend un processeur de calcul, des mémoires et une pile d'alimentation. L'unité de commande 30 est en outre reliée à un capteur de température monté dans le conduit 1 et à un capteur de pression monté dans le conduit 1, la température du gaz et la pression du gaz entrant dans le calcul de l'énergie consommée. L'unité de commande 30 comprend en outre une interface utilisateur comportant un écran d'affichage et est reliée à une unité de liaison radio pour communiquer périodiquement à un serveur distant un identifiant du compteur et l'énergie consommée. Cet agencement de l'unité de commande 30 est connu en lui-même et ne sera pas plus détaillé ici.

L'unité de commande et les capteurs sont ici pourvus de moyens de transmission de données sans fil permettant la récupération par l'unité de commande 30 des données de mesure des capteurs. L'alimentation électrique des différents capteurs se fait ici par des fils électriques traversant la paroi du conduit 1 de manière étanche. En variante, on peut prévoir d'alimenter les capteurs soit par une batterie intégrée aux capteurs, soit via un générateur introduit dans le conduit, soit par induction. Les capteurs utilisent par exemple une technologie analogue à celle utilisé pour les éléments RFID.

Le compteur comprend un dispositif d'alimentation secondaire comprenant un générateur, généralement désigné en 40, relié à une batterie 50. Le générateur 40 comprend un élément d'entrée 41 lié en rotation au rotor 11. L'élément d'entrée 41 comprend un disque disposé dans le conduit 1 et solidaire de l'arbre 11. Le disque porte ici deux aimants 42 diamétralement opposés et désaxés par rapport à l'arbre 11. Le générateur 40 comprend à l'extérieur du conduit 1 un support fixe 43 portant deux éléments magnétostrictifs 44 diamétralement opposés qui sont montés en regard d'une trajectoire des aimants 42 pour être soumis, lorsqu'un des aimant 42 se trouve au voisinage de chaque élément magnétostrictif 44, au champ magnétique produit par chaque aimant 42. Un élément piézoélectrique 45 est monté sur chacune des faces opposées de chaque élément magnétostrictif 44 et est électriquement relié à un dispositif de charge 46 raccordé à la batterie 50. On comprend que le champ magnétique provoque une déformation de l'élément magnétostrictif 44 qui sollicite mécaniquement les éléments piézoélectriques 45 qu'il porte. Ces éléments piézoélectriques 45 produisent en retour des charges électriques exploitées de façon connue en soit dans le dispositif de charge 46 pour en faire un courant de charge de la batterie 50.

La batterie 50 est reliée électriquement à l'unité de commande 30 pour alimenter celle-ci (ceci permet d'économiser la pile), l'unité de commande assurant également l'alimentation des dispositifs de mesure 10, 20.

En fonctionnement, l'unité de commande 30 est agencée pour :
- utiliser les mesures provenant du premier dispositif de mesure 10 tant que la vitesse d'écoulement du gaz (approchée à partir de la vitesse du rotor) est dans la partie de la plage de vitesses correspondant au fonctionnement optimal du premier dispositif de mesure 10 ;
- utiliser les mesures provenant du deuxième dispositif de mesure 20 dans les autres cas.

L'unité de commande 30 est en outre agencée pour effectuer périodiquement une opération d'étalonnage du premier dispositif de mesure 10 par comparaison des mesures des deux dispositifs de mesure 10, 20 sur toute la plage de vitesses. Ceci permet de corriger les mesures effectuées par le premier dispositif de mesure 10 en tenant compte de l'évolution des frottements dans celui-ci, par exemple liée à l'usure.

L'unité de commande 30 est agencée également pour effectuer toutes les mesures au moyens du deuxième dispositif de mesure 20 si la précision du premier dispositif de mesure se révèle trop faible et pour émettre une alerte vers le serveur central pour obtenir l'intervention d'un technicien.

De préférence, il est prévu après la fabrication d'un compteur une opération de calibrage pour déterminer pour ce compteur le seuil de vitesse au-delà duquel le premier dispositif de mesure 10 à un fonctionnement optimal et en-deçà duquel le deuxième dispositif de mesure est activé par l'unité de commande 30 pour effectuer les mesures à la place du premier dispositif de mesure 10. Lors de cette opération de calibration, il est effectué des mesures sensiblement simultanées au moyen des dispositifs de mesure 10, 20 pour plusieurs vitesses d'écoulement de fluides, puis une comparaison des mesures des deux dispositifs de mesure pour chaque vitesse. Le seuil correspond à la vitesse à partir de laquelle l'écart entre les mesures atteint une valeur qui n'est plus acceptable.

Les éléments identiques ou analogues à ceux précédemment décrits porteront une référence numérique identique à ceux dans la figure 2 et la description qui suit du deuxième mode de réalisation représenté sur cette figure.

Dans ce deuxième mode de réalisation, le compteur comprend un conduit 1 ; un premier dispositif 10 de mesure d'une quantité de gaz circulant dans le conduit 1 ; un deuxième dispositif 20 de mesure d'une quantité de gaz circulant dans le conduit 1 ; une unité électronique de commande 30 qui est reliée aux deux dispositifs de mesure 10, 20 ; et un générateur 40 relié à une batterie 50.

Contrairement au premier mode de réalisation, le générateur 40 est logé en totalité dans le conduit 1. Les fils de liaison de l'unité de commande aux différents capteurs et de la batterie 50 au générateur 40 passent au travers d'un passe-câble étanche 60 vissé dans un taraudage correspondant ménagé dans la paroi du conduit 1. En variante, le passe-câble peut être serti dans une paroi du conduit 1.

En outre, l'unité de commande 30 est logée dans le conduit 1 et reliée au générateur 40.

L'unité de commande 30 est alors dépourvue d'écran, celui-ci portant la référence 70, étant déporté à l'extérieur du conduit 1. L'unité de commande 30 transmet les données à afficher par l'écran 70 via des moyens de connexion sans fil.

Bien entendu, l'invention n'est pas limitée aux modes de réalisation décrits mais englobe toute variante entrant dans le champ de l'invention telle que définie par les revendications.

En particulier, le deuxième dispositif de mesure peut avoir une structure différente de celle décrite et par exemple comprendre un capteur thermique massique ou un capteur à effet Coriolis. Ces capteurs sont connus en eux-mêmes et utilisés dans les compteurs de gaz.

Le compteur peut être dépourvu de circuit d'alimentation secondaire ou le circuit d'alimentation secondaire peut être différent de celui décrit et comprendre par exemple un circuit inductif classique.

En variante, les composants électriques du compteur peuvent être reliés par des fils pour assurer leur alimentation électrique et la transmission de données.

En variante encore, le deuxième dispositif peut avoir un fonctionnement optimal dans une deuxième partie de la plage de vitesses qui est soit strictement ou partiellement inférieure à la première partie ou soit strictement ou partiellement supérieure à la première partie.

Alternativement, il est également envisageable que le deuxième dispositif de mesure ait une précision qui soit sensiblement identique sur toute la plage de vitesses mais inférieure à celle du premier dispositif dans la première partie de la plage de vitesses permettant un fonctionnement optimal du premier dispositif. Dans un tel cas, l'unité de commande est agencée pour :
- utiliser les mesures provenant du premier dispositif de mesure tant que la vitesse d'écoulement du gaz est dans la première partie de la plage de vitesses ;
- utiliser les mesures provenant du deuxième dispositif de mesure lorsque la vitesse d'écoulement du gaz est dans une deuxième partie de la plage de vitesses inférieure à la première partie de la plage de vitesses et dans une troisième partie de la plage de vitesses supérieure à la première partie de la plage de vitesses.

## Revendications

1. Compteur de fluide, comprenant un conduit de circulation du fluide, au moins un premier dispositif et un deuxième dispositif de mesure d'une quantité de fluide circulant dans le conduit, et une unité électronique de commande reliée aux deux dispositifs de mesure, le premier dispositif de mesure comportant un rotor monté à rotation dans le conduit pour être entrainé en rotation par le fluide circulant à une vitesse comprise dans une plage prédéterminée, le premier dispositif de mesure ayant un fonctionnement optimal lorsque la vitesse d'écoulement du gaz est dans une première partie de la plage de vitesses, le deuxième dispositif de mesure comportant un capteur efficace sur au moins une deuxième partie de la plage de vitesses au moins partiellement différente de la première partie, l'unité de commande du compteur est agencée pour
- utiliser les mesures provenant du premier dispositif de mesure tant que la vitesse d'écoulement du gaz est dans la première partie de la plage de vitesses ;
- utiliser les mesures provenant du deuxième dispositif de mesure lorsque la vitesse d'écoulement du gaz est dans la deuxième partie de la plage de vitesses.

2. Compteur selon la revendication 1, dans lequel le premier dispositif de mesure et le deuxième dispositif de mesure sont agencés pour être efficaces sur une partie commune de la plage de vitesse et l'unité de commande est agencée pour effectuer une opération d'étalonnage du premier dispositif de mesure par comparaison des mesures des deux dispositifs de mesure.

3. Compteur selon la revendication 1 ou la revendication 2, dans lequel le rotor est lié en rotation à un élément d'entrée d'un générateur relié électriquement à une batterie.

4. Compteur selon la revendication 3, dans lequel la batterie est reliée électriquement au deuxième dispositif de mesure pour alimenter celui-ci.

5. Compteur selon la revendication 3, dans lequel la batterie est reliée électriquement à l'unité de commande pour alimenter celle-ci.

6. Compteur selon la revendication 3, dans lequel l'élément d'entrée est monté pour tourner dans le conduit autour d'un axe de rotation et porte au moins un aimant excentré par rapport à l'axe de rotation et le générateur comprend un élément magnétostrictif monté à l'extérieur du conduit en regard d'une trajectoire de l'aimant, un élément piézoélectrique est fixé à l'élément magnétostrictif et est électriquement relié à un dispositif de charge raccordé à la batterie.

7. Compteur selon la revendication 3, dans lequel la batterie est reliée au générateur via un conducteur traversant une paroi du conduit de manière étanche.

8. Compteur selon la revendication 1, dans lequel au moins un des dispositifs de mesure est électriquement relié à l'unité de traitement via un conducteur traversant de manière étanche une paroi du conduit.

9. Compteur selon la revendication 1, dans lequel les capteurs et l'unité de commande sont pourvus de moyens de transmission sans fil de données.

10. Compteur selon la revendication 1, dans lequel au moins une partie de l'unité de commande est logée dans le conduit.

11. Compteur selon la revendication 1, dans lequel la deuxième partie correspond à des vitesses d'écoulement inférieures à celles de la première partie.
